# EUROPÄISCHE PATENTSCHRIFT

(11) **EP 2 617 547 B1**
(45) Veröffentlichungstag und Bekanntmachung des Hinweises auf die Patenterteilung: **08.03.2017**
(21) Anmeldenummer: 12000379.3
(22) Anmeldetag: 20.01.2012
(51) Int. Cl.: B29B 9/06, B29C 47/00

(54) **Lochplatte und Lochplatteneinsatz sowie deren Verwendung**
Die plate and die plate insert, and use of same
Plaque à trou et insert de plaque à trou, et leur utilisation

(43) Veröffentlichungstag der Anmeldung: 24.07.2013
(73) Patentinhaber: Maag Automatik GmbH, 63762 Großostheim (DE)
(72) Erfinder: Dahlheimer, Stefan, 63801 Kleinostheim (DE); Boczon, Jaroslaw, 63811 Stockstadt (DE); Meidhof Helmuth, 63762 Grosstheim (DE); Braun, Thomas, 63762 Grossostheim (DE); Nising, Philip, CH-8618 Oetwil am See (CH); Weber, Jörg, CH-9542 Münchwilen TG (CH)
(74) Vertreter: Spranger, Stephan

(56) Entgegenhaltungen:
- EP-B1- 1 654 103
- DD-A5- 98 232
- DE-U1-202004 016 104
- GB-A- 2 160 814
- US-A- 3 516 120
- US-B1- 6 409 491

## Beschreibung

Die Erfindung betrifft eine Lochplatte z.B. eines Extruders und/oder einer Schmelzepumpe einer Granuliervorrichtung, z.B. für thermoplastisches Kunststoffmaterial wie etwa EPS, gemäß dem Oberbegriff des Anspruchs 1, ein System zur Granulierung in ein Fluid mit einer solchen Lochplatte gemäß Anspruch 14, einen Lochplatteneinsatz für eine solche Lochplatte gemäß dem Oberbegriff des Anspruchs 15 sowie die Verwendung einer solchen Lochplatte bzw. eines solchen Systems bzw. eines solchen Lochplatteneinsatzes gemäß Anspruch 21.

Generell werden zur Granulierung von thermoplastischem Kunststoffmaterial, wie z.B. Polyethylen, Polypropylen oder auch EPS, Granuliervorrichtungen mit z.B. Extrudern eingesetzt, bei welchen das geschmolzene Kunststoffmaterial durch Düsenöffnungen einer Lochplatte in ein Kühlmedium, beispielsweise Wasser, z.B. in einem Prozessraum oder einer Prozesskammer gepresst wird und von einer Messeranordnung, deren zumindest ein Messer die Düsenöffnungen der Lochplatte überstreicht, dort abgetrennt wird, so dass Granulatkörner gebildet werden. Entsprechende Vorrichtungen sind als Unterwassergranulierungsanlagen beispielsweise unter der Produktbezeichnung SPHERO® vom Unternehmen Automatik Plastics Machinery GmbH bekannt.

Bei solchen Granuliervorrichtungen kommt es in der Regel im Bereich der Lochplatte zu hohen thermischen Belastungen der Polymerschmelze aufgrund des unmittelbaren Kontakts mit dem heißen metallischen Oberflächen der Lochplatte einerseits sowie dem Kühlmedium und den sonstigen Anlagenteilen der Granuliervorrichtung andererseits. Insbesondere bei der Verarbeitung von treibmittelhaltigen Kunststoffschmelzen, beispielsweise aus EPS-Material, treten außerdem Probleme im Bereich der Schmelzeführung durch eine solche Lochplatte dadurch auf, dass dort zum einen ein hoher Schmelzedruck vorliegt und auch ein hoher Gegendruck durch den Druck des Kühlmediums in dem Prozessraum (zur Verhinderung von Ausgasungen des Treibmittels) und zum anderen der Durchmesser der entsprechenden Bohrungen der Düsenöffnungen sehr gering ist (beispielsweise etwa 0,1 bis 1,0 mm). Ferner ist die Verweilzeit des Schmelzematerials in den schmelzeführenden Kanalbereichen der Lochplatte durch ein laminares Strömungsprofil teilweise verhältnismäßig lang, was zum einen zum Zersetzen des Schmelzematerials an den entsprechenden Kanalwänden führen kann und zum anderen die Verfestigung des Schmelzematerials dort und damit die Ansammlung und schließlich Verstopfung der Düsenöffnungen mit Schmelzematerial bewirkt. Somit ist bei Lochplatten solcher Granuliervorrichtungen eine gute thermische Trennung von Schmelze und Lochplattenkörper wünschenswert, um zum einen den sicheren Betrieb einer entsprechenden Granuliervorrichtung zu gewährleisten und zum anderen auch möglichst lange Standzeiten ohne Verstopfen der Düsen dort zu ermöglichen. Gleichzeitig ist aber auch ein möglichst gleichmäßiger Temperaturverlauf über den Strömungsverlauf durch die Lochplatte von Bedeutung, um reproduzierbar gleichmäßige Fließbedingungen und somit Materialeigenschaften zu erhalten und ein Verklumpen der Schmelze dort zu verhindern. Ferner ist zu beachten, dass wiederum möglichst viel Wärmeenergie aus dem beheizten Lochplattenkörper in den Bereich des Übergangs zum Prozessraum gelangen sollte, um eine zu starke Abkühlung der Schmelzekanäle durch das Kühlmedium in diesem Bereich zu vermeiden.

Das US-Patent US 4,678,423 beschreibt eine Granulierlochplatte zur Anordnung an der Stirnfläche eines Granulierkopfs eines Extruders zum Granulieren von Kunststoffen, wobei diese Granulierlochplatte mit hoch wärmeleitfähigen Lochplatteneinsätzen ausgestattet ist.

Die deutsche Offenlegungsschrift DE 32 43 332 A1 beschreibt Düsen, welche mittels eines Luftspalts nur im Bereich der Austrittsöffnung davon gegen einen Düsenplattenkörper isoliert sind.

Aus der Druckschrift DE 20 2004 016 104 U1 ist eine Lochplatte für einen Unterwassergranulator bekannt, bei der um einen zentralen Bereich der Lochplatte verteilt angeordnete Düsen für den Durchtritt von Schmelze angeordnet sind, wobei die Lochplatte einen Lochplatteneinsatz aufweist, der in den Schmelzekanal einsetzbar ist und einen Luftspalt zum Material der Lochplatte hin ausbildet.

Aus der Druckschrift GB 2 160 814 A ist ein Pelletiergerät bekannt, das ebenfalls einen Lochplatteneinsatz aufweist, der in den Schmelzekanal einsetzbar ist und der einen Luftspalt zum Material der Lochplatte hin ausbildet.

Aus der Druckschrift DD 98 232 ist ein Spritzwerkzeug für Unterwassergranulatoren bekannt, in dem Metallröhrchen beabstandet mit isolierenden Luftspalte vorgesehen sind, in denen die Schmelze bis zu einem einzelnen Düsenmundstück aus dem Material des Spritzkopfes geführt wird.

Es ist somit die Aufgabe der vorliegenden Erfindung, eine Lochplatte bzw. einen Lochplatteneinsatz dafür vorzusehen, welche(r) konstruktiv und in der Herstellung einfach und möglichst kostengünstig das Vorsehen einer optimierten Wärmeisolation bei gleichzeitig möglichst konstantem Temperaturverlauf und gleichbleibendem Strömungsprofil über den Schmelzeweg ermöglicht. Ferner soll somit eine möglichst lange Standzeit und gegebenenfalls eine möglichst einfache Wiederaufarbeitung einer Lochplatte erfindungsgemäß ermöglicht sein. Erfindungsgemäß soll auch ein entsprechendes System zur Granulierung in ein Fluid und die entsprechende Verwendung einer solchen Lochplatte bzw. eines solchen Systems ermöglicht sein.

Die erfindungsgemäße Aufgabe wird gelöst durch eine Lochplatte einer Granuliervorrichtung mit den Merkmalen gemäß Anspruch 1, ein System zur Granulierung in ein Fluid mit einer solchen Lochplatte mit den Merkmalen gemäß Anspruch 14, einen Lochplatteneinsatz mit den Merkmalen gemäß Anspruch 15, sowie die Verwendung einer solchen Lochplatte bzw. eines solchen Systems bzw. eines solchen Lochplatteneinsatzes mit den Merkmalen gemäß Anspruch 21. Bevorzugte Ausführungsformen sind in den jeweiligen abhängigen Ansprüchen definiert.

Die Lochplatte einer Granuliervorrichtung für Schmelzematerial gemäß der Erfindung weist zumindest eine darin angeordnete Düsenöffnung und einen oder mehrere Lochplatteneinsätze, eingesetzt in einen Lochplattengrundkörper, auf, wobei in Hauptflussrichtung des dort durchtretenden Schmelzematerials gesehen im eingangsseitigen und ausgangsseitigen Bereich des jeweiligen Lochplatteneinsatzes zumindest ein ausgangsseitiger Abstandskragen und zumindest ein eingangsseitiger Abstandskragen vorgesehen ist, so dass zwischen dem jeweiligen Lochplatteneinsatz und dem Lochplattengrundkörper jeweils ein im wesentlichen über die gesamte Länge des Lochplatteneinsatzes verlaufender Luftspalt besteht, und wobei im Bereich des durch einen jeweiligen Lochplatteneinsatz hindurch verlaufenden Schmelzekanals dieser Schmelzekanal jeweils strömungsoptimierende Maßnahmen aufweist, in Form einer Anti-Haft Beschichtung und/oder in Form einer spanend glättenden Oberflächenbearbeitung, wie beispielsweise Honen.

Schon durch die erfindungsgemäße Isolierung durch den Luftspalt, welcher im Wesentlichen über die gesamte Länge bzw. über die gesamte Länge des erfindungsgemäßen Lochplatteneinsatzes zwischen dem Lochplatteneinsatz und dem Lochplattengrundkörper verläuft, kann somit eine gute Wärmeisolation erfolgen, wobei diese Isolierung erfindungsgemäß noch dadurch erhöht sein kann, dass als Lochplatteneinsatzmaterial zusätzlich ein Material mit bevorzugt wärmeisolierenden Eigenschaften eingesetzt wird, bevorzugt ein isolierendes Material mit einem Wärmeleitkoeffizienten, welcher kleiner ist als der Wärmeleitkoeffizient des Materials des Lochplattengrundkörpers. Gleichzeitig ist aber durch die erfindungsgemäße Antihaftbeschichtung und/oder die erfindungsgemäße spanend glättende Oberflächenbearbeitung ein Anhaften von Schmelzematerial an der entsprechenden Wandung verringert bzw. erfindungsgemäß ganz vermieden, so dass das Strömungsverhalten des Schmelzmaterials dadurch trotz der verbesserten Wärmeisolation, und auch ohne den Einsatz von wärmeleitendem Material dort nötig zu machen, zusätzlich überraschend auch verbessert ist. Eine sich durch das Anhaften ergebende unerwünschte Scherströmung des Schmelzematerials mit einer sich so entsprechend einstellenden eher parabelförmigen Strömungsgeschwindigkeitsverteilung über den Durchmesser des Schmelzekanals kann so erfindungsgemäß vermieden werden, wobei sich so eine eher wünschenswerte pfropfenförmige und somit gleichmäßigere Strömungsgeschwindigkeitsverteilung über den Durchmesser des Schmelzekanals erfindungsgemäß ergibt. Insbesondere kommt es durch diese strömungsoptimierenden Maßnahmen zu einer Verringerung von Anbackungen und Zersetzung von Schmelzematerial an den Oberflächen des Schmelzekanals. Derartige Anbackungen von vercracktem Schmelzematerial könnten sich lösen und die feinen Bohrungen der Düsenplatte so zusetzen.

Die erfindungsgemäße Lochplatte mit den erfindungsgemäß bevorzugt einsetz- bzw. herausnehmbaren Lochplatteneinsätzen bietet ferner auch eine flexible Anpassung an unterschiedliche Schmelzematerialien. Granulatkörner-Abmessungen und Materialdurchsätze, indem beispielsweise auch der Innendurchmesser des jeweils dort hindurch laufenden Schmelzekanals eines jeweiligen Lochplatteneinsatzes an die Viskosität und sonstige Fließeigenschaften der zu verarbeitenden Kunststoffschmelze angepasst werden kann. Dadurch, dass die Lochplatteneinsätze bezüglich dem Lochplattengrundkörper erfindungsgemäß bevorzugt einsetz- bzw. herausnehmbar gestaltet sind, ist außerdem eine einfache Reinigungsmöglichkeit dieser Lochplatteneinsätze insbesondere jeweils im Bereich des dortigen Schmelzekanals möglich, so dass sich im Betrieb gar keine anhaftenden Verkrustungen mit Schmelzematerial auf Dauer ansammeln können. Auch sind die erfindungsgemäßen Lochplatteneinsätze verhältnismäßig schnell austauschbar, was die erfindungsgemäße Lochplatte über längere Zeiträume einsetzbar macht, da mit neuen Lochplatteneinsätzen bereits weiter produziert werden kann, während die ausgetauschten Lochplatteneinsätze gleichzeitig z.B. gereinigt werden können.

Eine Antihaftbeschichtung im Sinne der Erfindung weist eine verhältnismäßig geringere Oberflächenenergie auf als das unbeschichtete Ausgangsmaterial und somit eine demgegenüber verringerte Benetzbarkeit, Als erfindungsgemäße Antihaftbeschichtung geeignet hat sich beispielsweise eine sogenannte Metco-Beschichtung des Unternehmens Sulzer erwiesen. Entsprechende Beschichtungen können beispielsweise im PVD-(Physical Vapour Deposition)-Verfahren aufgebracht werden. Weitere Beispiele von geeigneten Zusammensetzungen von Antihaftbeschichtungen sind beispielsweise Glaskeramik, Keramik, Siliziumoxide wie etwa Thermolon™, Fluorpolymere, siliziumbasierte Polymere und/oder Lunac1 des Unternehmens WMV Europe bv.

Gemäß einer bevorzugten Ausführungsform der erfindungsgemäßen Lochplatte kann der Schmelzekanal des jeweiligen Lochplatteneinsatzes mit einem jeweiligen Schmelzekanal des Lochplattengrundkörpers fluchtend angeordnet sein. Somit werden Barrieren, welche den Schmelzestrom behindern und dann zu Anlagerungen führen könnten, besonders wirksam vermieden.

Bevorzugt weist jeder der Lochplatteneinsätze einen Einlaufkegel auf welcher ebenfalls thermisch isoliert und mit der Antihaftbeschichtung versehen ist, wobei besonders bevorzugt dieser Einlaufkegel fluchtend mit dem Einlaufkegel im Bereich des jeweiligen Schmelzekanals des Lochplattengrundkörpers ausgebildet sein kann.

Erfindungsgemäß bevorzugt können der jeweils ausgangsseitige Abstandskragen in einem Bereich angeordnet sein, in welchem im eingebauten Zustand des jeweiligen Lochplatteneinsatzes in den Lochplattengrundkörper die dortige Temperatur des umgebenden Lochplattengrundkörpers genau gleich oder im Wesentlichen gleich der Temperatur der dort durch den Schmelzekanal strömenden Schmelze ist. Die genaue Lage kann dabei im Vorfeld z.B. durch Simulationsrechnungen bestimmbar sein.

Die Anordnung der jeweils ausgangsseitigen Abstandskrägen der Lochplatteneinsätze im Bereich, in welchem im eingebauten Zustand der Lochplatteneinsätze in dem Lochplattengrundkörper die dortige Temperatur des umgebenden Lochplattengrundkörpers genau oder im Wesentlichen gleich der Temperatur, der dort durch den Schmelzekanal strömenden Schmelze ist, hat den Vorteil, dass es dadurch nicht zu Wärme- bzw. Kältebrücken kommt, welche dort lokal zu einer negativen Beeinflussung des Schmelzematerials selbst bezüglich seiner Zusammensetzung und/oder zu einer negativen Beeinflussung des lokalen Strömungsverhaltens des Schmelzematerials dort, insbesondere zu einer Verklumpung und Anhaftung des Schmelzmaterials, führen würden.

Die erfindungsgemäßen Lochplatteneinsätze bestehen bevorzugt aus einem wärmeisolierenden Material, bevorzugt aus einem wärmeisolierenden Material mit einem Wärmeleitkoeffizienten, welcher kleiner ist als der Wärmeleitkoeffizient des Materials des Lochplattengrundkörpers.

Zweckmäßig ergibt sich bei der erfindungsgemäßen Lochplatte die strömungsoptimierende Maßnahme in Form der spanend glättenden Oberflächenbearbeitung, z.B. durch Honen, eine Oberflächenrauhigkeit im Bereich des Schmelzekanals des erfindungsgemäßen Lochplatteneinsatzes von kleiner oder gleich 0,8 µm, bevorzugt im Bereich von 0,4 µm bis 0,6 µm. Somit kann erfindungsgemäß das Strömungsverhalten der Schmelze dort so verbessert sein, dass dadurch Anhaftungen aufgrund von Rauhigkeiten dort besonders zuverlässig vermieden werden.

Bei der erfindungsgemäßen Lochplatte ist bevorzugt zumindest der eingangsseitige Abstandskragen umfänglich durchgehend ausgebildet, so dass er den jeweiligen Lochplatteneinsatz gegen den jeweiligen Luftspalt zwischen dem jeweiligen Lochplatteneinsatz und dem Lochplattengrundkörper dort abdichtend abschließt. Es könnte auch ein zusätzlicher Abdichtungsabschnitt zwischen dem jeweiligen Lochplatteneinsatz und dem Lochplattengrundkörper, z.B. in Form eines Dichtungsflanschabschnitts des Lochplattengrundkörpers dort, vorgesehen sein.

Der ausgangsseitige Abstandskragen ist erfindungsgemäß umfänglich abschnittsweise unterbrochen ausgebildet, so dass Wärme- bzw. Kältebrücken in diesem Bereich zwischen Lochplatteneinsätzen und Lochplattengrundkörper zusätzlich verringert werden.

Der ausgangsseitige Abstandskragen und der eingangsseitige Abstandskragen sind am jeweiligen Lochplatteneinsatz angeordnet. Somit kann der entsprechende erfindungsgemäße Lochplatteneinsatz besonders einfach durch Außenbearbeitung, besonders bevorzugt beispielsweise als entsprechend rotationssymmetrisches Drehteil, herstellbar sein.

Erfindungsgemäß bevorzugt kann der ausgangsseitige Abstandskragen und/oder der eingangsseitige Abstandskragen aber auch am Lochplattengrundkörper angeordnet sein.

Bei der erfindungsgemäßen Lochplatte sind mehrere Düsenöffnungen jeweils einem Lochplatteneinsatz clusterartig zugeordnet.

Gemäß einer weiteren bevorzugten Ausführungsform der erfindungsgemäßen Lochplatte können die zwischen den jeweiligen Lochplatteneinsätzen und dem Lochplattengrundkörper jeweiligen Luftspalte als Temperierräume so ausgestaltet sein, dass sie von einem Temperierfluid, z.B. einem Temperieröl, durchströmbar sind, wobei besonders bevorzugt der jeweilige Temperierraum mittels zumindest einer Dichtung, bevorzugt einer flexiblen Dichtung, zusätzlich gegen den jeweiligen Lochplatteneinsatz und den Lochplattengrundkörper fluiddicht abgedichtet sein kann. Die Dichtung kann dabei beispielsweise eine O-Ring-Dichtung sein, welche jeweils in entsprechende Nuten des Lochplattengrundkörpers und/oder der jeweiligen Lochplatteneinsätze eingesetzt ist.

Die erfindungsgemäße Lochplatte kann zur zusätzlichen Beeinflussung und Einstellbarkeit der Temperierung dort bevorzugt eine zusätzliche Heizeinrichtung der Lochplatte, bevorzugt z.B. im Lochplattengrundkörper, aufweisen wobei die Heizeinrichtung durch Temperierkanäle in der Lochplatte, welche über einen Zulauf und Ablauf mit einem Temperierfluid durchströmbar sind, oder durch elektrisch widerstandsbeheizbare Einsätze in die Lochplatte ausgebildet sein kann. Besonders bevorzugt kann dabei das Temperierfluid der zusätzlichen Heizeinrichtung auch den Luftspalt durchströmen, wobei eine Fluidverbindung zwischen den Temperierkanälen und dem jeweiligen Luftspalt besteht.

Zweckmäßig und erfindungsgemäß bevorzugt kann der Lochplatteneinsatz aus einem Keramik-Material oder aus einem temperaturbeständigen Polymermaterial bestehen, bevorzugt aus Polymermaterial aus der Gruppe PBI, PTFE, PAI, PEEK oder PPS mit denen Polymeren und/oder Copolymeren.

Gemäß einer bevorzugten Ausführungsform der erfindungsgemäßen Lochplatte kann die Oberfläche davon, aus welcher zu granulierendes Schmelzematerial austritt, mit einer abrasionsresistenten Schicht versehen sein, bevorzugt aus Metall-Nitrit, besonders bevorzugt Chrom-Nitrit oder Titan-Nitrit. Der Verschleißschutz dort kann dadurch erfindungsgemäß bevorzugt verbessert sein.

Mit der erfindungsgemäßen Lochplatte ist ein System zur Granulierung in ein Fluid, bevorzugt ein Unterwassergranulationssystem, vorgesehen.

Wie beschrieben, weist der erfindungsgemäße Lochplatteneinsatz zum Einsetzen in einen Lochplattengrundkörper einer entsprechend erfindungsgemäßen Lochplatte einer Granuliervorrichtung, jeweils in Hauptflussrichtung gesehen im eingangsseitigen und ausgangsseitigen Bereich des jeweiligen Lochplatteneinsatzes zumindest einen ausgangsseitigen Abstandskragen und zumindest einen eingangsseitigen Abstandskragen auf, so dass zwischen dem jeweiligen Lochplatteneinsatz und dem Lochplattengrundkörper jeweils ein über die gesamte Länge des Lochplatteneinsatzes verlaufender Luftspalt besteht, und im Bereich des durch einen jeweiligen Lochplatteneinsatz hindurch verlaufenden Schmelzekanals weist dieser Schmelzekanal jeweils strömungsoptimierende Maßnahmen auf, in Form einer Anti-Haft Beschichtung und/oder in Form einer spanend glättenden Oberflächenbearbeitung.

Der ausgangsseitige Abstandskragen und der eingangsseitige Abstandskragen sind am jeweiligen Lochplatteneinsatz angeordnet.

Der erfindungsgemäße Lochplatteneinsatz besteht bevorzugt aus einem wärmeisolierenden Material, bevorzugt aus einem wärmeisolierenden Material mit einem Wärmeleitkoeffizienten, welcher kleiner ist als der Wärmeleitkoeffizient des Materials des Lochplattengrundkörpers.

Gemäß einer bevorzugten Ausführungsform des erfindungsgemäßen Lochplatteneinsatzes ergibt die strömungsoptimierende Maßnahme in Form der spanend glättenden Oberflächenbearbeitung eine Oberflächenrauhigkeit im Bereich des Schmelzekanals von kleiner oder gleich 0,8 µm, bevorzugter im Bereich von 0,4 µm bis 0,6 µm.

Gemäß einer weiteren bevorzugten Ausführungsform des erfindungsgemäßen Lochplatteneinsatzes ist der jeweils ausgangsseitige Abstandskragen in einem Bereich angeordnet, in welchem im eingebauten Zustand des jeweiligen Lochplatteneinsatzes in den Lochplattengrundkörper die dortige Temperatur des umgebenden Lochplattengrundkörpers genau gleich oder im Wesentlichen gleich der Temperatur der dort durch den Schmelzekanal strömenden Schmelze ist.

Gemäß einer weiteren bevorzugten Ausführungsform des erfindungsgemäßen Lochplatteneinsatzes ist zumindest der eingangsseitige Abstandskragen umfänglich durchgehend ausgebildet, so dass er den jeweiligen Lochplatteneinsatz gegen den jeweiligen Luftspalt zwischen dem jeweiligen Lochplatteneinsatz und dem Lochplattengrundkörper dort abdichtend abschließt.

Zumindest der ausgangsseitige Abstandskragen ist umfänglich abschnittsweise unterbrochen ausgebildet.

Die hinsichtlich der erfindungsgemäßen Lochplatte mit den erfindungsgemäßen Lochplatteneinsätzen beschriebenen Merkmale und Vorteile gelten entsprechend auch (soweit anwendbar) für den entsprechenden erfindungsgemäßen Lochplatteneinsatz an sich, welcher beispielsweise als auswechselbares Ersatzteil vorgesehen werden kann.

Die erfindungsgemäße Lochplatte bzw. das erfindungsgemäß mit einer solchen Lochplatte versehene System zur Granulierung bzw. der erfindungsgemäße Lochplatteneinsatz findet Verwendung für eine Granulierung in ein Fluid, bevorzugt für die Unterwassergranulation, eines Polymer-Schmelzematerials, welches einen thermisch sensiblen Bestandteil und/oder ein Schäummittel enthält, bevorzugt expandierbares Polystyrol (EPS). Das Schmelzematerial ist also ein thermoplastisches Kunststoffmaterial und/oder eine Polymerschmelze, welche einen thermisch sensiblen Bestandteil enthält, z.B. eine Substanz mit einem Gewichtsverlust in isothermen TGA-Messungen von mehr als 1% pro Stunde bei Temperaturen von 220°C, also ein Flammschutzmittel, und/oder ein Schäummittel enthält. Beispiele sind niedrigsiedendes Polyamid 6 mit Caprolactam als flüchtigem Bestandteil oder expandierbares Polystyrol, EPS, mit einem Treibmittel und/oder optional einem bromhaltigen Flammschutzmittel, wie etwa Hexabromcyclododecan, HBC. Als Treibmittel kann beispielsweise Pentan, Butan, Hexan, Methanol, Ethanol, Propanol, Butanol, Hexanol, 2-Ethylhexanol, Methyl, Wasser, CO₂, Dimethyl Carbonat, und Mischungen davon, verwendet werden. Erfindungsgemäß wird als Treibmittel dabei Pentan verwendet**.**

Die Erfindung wird im Folgenden anhand der beigefügten Figuren näher beispielhaft erläutert werden. Es zeigen:
- Fig. 1: eine schematische Schnittansicht eines Lochplatteneinsatzes für eine Lochplatte gemäß einer bevorzugten Ausführungsform der Erfindung; und
- Fig. 2: eine schematische Schnittansicht einer Lochplatte mit einem Lochplatteneinsatz gemäß einer bevorzugten Ausführungsform der Erfindung.

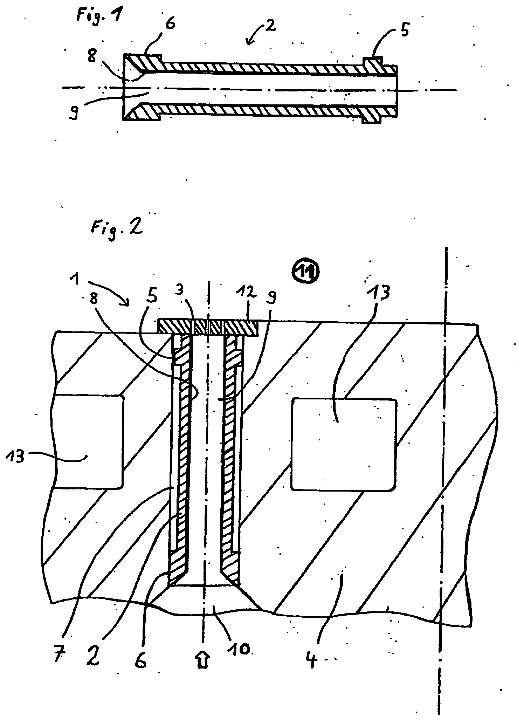

Figur 1 zeigt eine schematische Schnittansicht eines Lochplatteneinsatzes 2 für eine Lochplatte 1 z.B. eines Extruders oder einer Schmelzepumpe, z.B. für thermoplastisches Kunststoffmaterial, gemäß einer bevorzugten Ausführungsform der Erfindung.

Der erfindungsgemäße Lochplatteneinsatz 2 dient zum wechselbaren, d. h. herausnehmbar und wieder einsetzbaren Einsetzen in einen Lochplattengrundkörper 4 einer Lochplatte 1 einer Granuliervorrichtung (siehe diesbezüglich auch Fig. 2). Der Lochplatteneinsatz 2 weist gemäß der in Figur 1 gezeigten bevorzugten Ausführungsform jeweils in Hauptflussrichtung der dort hindurch tretenden Schmelze durch einen dort hindurch verlaufenden Schmelzekanal 9 gesehen eingangsseitig und ausgangsseitig zumindest einen eingangsseitigen Abstandskragen 6 und einen ausgangsseitigen Abstandskragen 5 auf. Ferner weist der Lochplatteneinsatz 2 strömungsoptimierende Maßnahmen auf, nämlich gemäß der in Figur 1 gezeigten bevorzugten Ausführungsform in Form einer Antihaftbeschichtung 8 im Bereich des dort hindurch verlaufenden Schmelzekanals 9, wobei die Antihaftbeschichtung 8 sich auch im eingangsseitigen Einlaufkegel des Lochplatteneinsatzes 2 (in Fig. 1 links zu sehen) erstreckt. Auch eine spanend glättende Oberflächenbearbeitung, z.B. durch Honen, ist als erfindungsgemäß strömungsoptimierende Maßnahme denkbar, aber hier nicht darstellbar. Der Schmelzekanal 9 kann erfindungsgemäß bevorzugt beispielsweise einen kreisförmigen Querschnitt aufweisen mit einem bevorzugten Durchmesser von bis zu 8 mm.

Figur 2 zeigt eine schematische Schnittansicht einer Lochplatte 1 mit einem Lochplatteneinsatz 2 gemäß einer bevorzugten Ausführungsform der Erfindung. In den Figuren bezeichnen gleiche Bezugszeichen auch gleiche Elemente.

Die Lochplatte 1 weist einen Lochplattengrundkörper 4 auf, welcher z.B. an einen Extruder oder eine Schmelzepumpe einer Granuliervorrichtung (nicht gezeigt) angesetzt werden kann oder den Abschluss davon bildet. In den Lochplattengrundkörper 4 sind mehrere Lochplatteneinsätze 2 entsprechend der in Figur 1 gezeigten erfindungsgemäß bevorzugten Ausführungsform davon eingesetzt, welche jeweils in Fluidverbindung mit einer oder im gezeigten Fall mehrerer Düsenöffnung(en) 3 stehen, welche sich zu einem z.B. mit Wasser als Kühl- und Transportmedium gefüllten bzw. davon durchströmten Prozessraum 11 der Granuliervorrichtung hin öffnen. Zwischen den Lochplatteneinsätzen 2 mit ihren ausgangsseitigen Abstandskrägen 5 und eingangsseitigen Abstandskrägen 6 und dem Lochplattengrundkörper 4 besteht so erfindungsgemäß jeweils ein im wesentlichen über die gesamte Länge der Lochplatteneinsätze 2 verlaufender Luftspalt 7. Die ausgangsseitigen Abstandskrägen 5 und eingangsseitigen Abstandskrägen 6 können gemäß einer hier nicht gezeigten aber ebenfalls bevorzugten Ausführungsform der Erfindung auch am Lochplattengrundkörper 4 angeordnet sein. Zusätzlich sind an der dortigen Stirnfläche des Lochplattengrundkörpers 4 noch ein oder mehrere Lochplattenverstärkungselement(e) 12, bevorzugt beispielsweise aus gegen Abrasion durch Messer einer Schneidvorrichtung resistenterem Material im Vergleich zum Lochplattengrundkörper 4, vorgesehen, welche(s) gemäß der in Figur 2 gezeigten Ausführungsform jeweils einzelnen Lochplatteneinsätzen 2 so zugeordnet ist/sind, dass mehrere der dort hindurch laufenden Düsenöffnungen 3 mit dem dort durch den Lochplatteneinsatz 2 hindurch verlaufenden Schmelzekanal 9 in Fluidverbindung stehen. Die erfindungsgemäß gebildete Lochplatte 1 bildet mit den in den Lochplattengrundkörper 4 eingesetzten Lochplatteneinsätzen 2 und den Lochplattenverstärkungselementen 12 bzw. gegebenenfalls mit dem einen Lochplattenverstärkungselement 12 eine plane Lochplatten-Stirnfläche mit den darin befindlichen Düsenöffnungen 3. Die Dicke der/des Lochplattenverstärkungselemente(s) 12 sowie der Durchmesser der Düsenöffnungen 3 (beispielsweise bei EPS-Materialien 0,1 bis 1,0 mm) hat im Übrigen auch Einfluss auf den Druck des Schmelzematerials im Bereich der Schmelzekanäle 9. Je größer die Dicke und je geringer der Bohrungsdurchmesser, umso höher wird der Druck dort im Schmelzekanal 9 sein, d.h. der Druckverlust des entsprechenden Schmelzematerials bei Durchtritt durch die Düsenöffnungen 3 dort im Bereich der/des Lochplattenverstärkungselemente(s) 12 zum Prozessraum 11 wird umso höher. Daher kann beim Berieb einer solchen Lochplatte 1 eine Schmelzepumpe bzw. eine zusätzliche Schmelzepumpe gegebenenfalls erforderlich sein (in Figur 2 nicht gezeigt).

Der Schmelzekanal 9 des jeweiligen Lochplatteneinsatzes 2 fluchtet im eingesetzten Zustand des Lochplatteneinsatzes 2 mit einem jeweiligen Schmelzekanal 10 des Lochplattengrundkörpers 4. Der mit dem jeweiligen Schmelzekanal 10 des Lochplattengrundkörpers 4 fluchtende Schmelzekanal 9 des jeweiligen Lochplatteneinsatzes 2 ist gemäß der gezeigten Ausführungsform so gestaltet, dass der Einlaufkegel davon fluchtend mit dem Einlaufkegel im Bereich des jeweiligen Schmelzekanals 10 des Lochplattengrundkörpers 4 ist und, wie gesagt, mit mehreren Düsenöffnungen 3 in Fluidverbindung steht. Zur Abdichtung des Luftspalts 7 im eingangsseitigen Bereich sind gemäß der in Figur 2 gezeigten Ausführungsform der Erfindung zumindest die eingangsseitigen Abstandskrägen 6 umfänglich durchgehend ausgebildet.

Zur Temperierung der erfindungsgemäßen Lochplatte 1 sind in dem Lochplattengrundkörper 4 noch Temperierkanäle 13 angeordnet, welche entweder von einem Temperierfluid, wie etwa Temperieröl, durchströmt werden können, oder mit Temperierpatronen, wie etwa elektrisch betriebenen Heizpatronen (in Figur 2 nicht gezeigt) bestückt sein können. Bevorzugt kann das Temperierfluid der zusätzlichen Heizeinrichtung auch den Luftspalt (9) durchströmen, wobei dann eine Fluidverbindung zwischen den Temperierkanälen (13) und dem jeweiligen Luftspalt (9) besteht (in Fig. 2 nicht explizit gezeigt).

Die Hauptflussrichtung des Schmelzestroms durch den Schmelzekanal 10 bzw. den Schmelzekanal 9 ist in Figur 2 durch einen Pfeil angegeben.

Durch die erfindungsgemäße Gestaltung der Lochplatte 1 mit den erfindungsgemäßen Lochplatteneinsätzen 2 ist eine flexible und einfache Konstruktion einer Lochplatte 1 möglich, wobei auch ein Austausch schnell und zuverlässig möglich ist. Durch den Austausch der Lochplatteneinsätze können im Falle der Bildung von Ablagerungen im Bereich der Schmelzekanäle zudem diese binnen kurzer zeit gereinigt werden und die Lochplatte wider eingesetzt werden. Die entfernten Lochplatteneinsätze können dann separat gereinigt und wiederverwendet werden.

In der Lochplatte sind mehrere Düsenöffnungen jeweils einem Lochplatteneinsatz clusterartig zugeordnet.

Zweckmäßig kann der Lochplatteneinsatz aus einem Keramik-Material oder aus einem temperaturbeständigen Polymermaterial bestehen, bevorzugt aus Polymermaterial aus der Gruppe PBI, PTFE, PAI, PEEK oder PPS mit denen Polymeren und/oder Copolymeren.

Gemäß einer bevorzugten Ausführungsform kann die Oberfläche der Lochplatte, aus welcher zu granulierendes Schmelzematerial austritt, mit einer abrasionsresistenten Schicht versehen sein, bevorzugt aus Metall-Nitrit, besonders bevorzugt Chrom-Nitrit oder Titan-Nitrit. Der Verschleißschutz dort kann dadurch erfindungsgemäß bevorzugt verbessert sein.

Mit der Lochplatte ist ein System zur erfindungsgemäßen Granulierung in ein Fluid, bevorzugt ein in seinen grundlegenden, sonstigen, nicht erfindungsrelevanten Funktionsgruppen bekanntes Unterwassergranulationssystem, vorgesehen.

Die Lochplatte bzw. das mit einer solchen Lochplatte versehene System zur Granulierung findet Verwendung für eine erfindungsgemäße Granulierung in ein Fluid, bevorzugt für die Unterwassergranulation, eines Schmelzematerials aus thermoplastischem Kunststoffmaterial und/oder einer Polymerschmelze, welche einen thermisch sensiblen Bestandteil und/oder ein Schäummittel enthält, dabei bevorzugt niedrigsiedendes Polyamid 6 mit Caprolactam als flüchtigem Bestandteil oder expandierbares Polystyrol, EPS, mit Pentan als Treibmittel und/oder optional einem bromhaltigen Flammschutzmittel.

### Beispiel:

Gemäß einer bevorzugten Ausführungsform der Erfindung wurde seitens der Anmelderin ein Versuchsmuster der erfindungsgemäßen Lochplatte mit den erfindungsgemäßen Lochplatteneinsätzen gebaut und getestet.

Die beispielhafte erfindungsgemäß eingesetzte Lochplatte diente der Herstellung von Granulatkörnern aus Polystyrol mit Treibmittelzusätzen (z.B. Pentan mit 1 bis 8 Gew.%) und einer Dichte des entsprechenden Schmelzematerials von 0,85 g/cm³, was im ausgehärteten Zustand eine Dichte von 1,00 g/cm³ ergab. Der Durchsatz an Schmelzematerial durch die Düsenöffnungen (1 Cluster, siehe unten) der beispielhaften Lochplatte betrug zwischen etwa 8 und etwa 18 kg/Stunde bei einem sich ergebenden durchschnittlichen Gewicht der Granulatkörner von 0,2 mg bzw. 0,5 mg und einem durchschnittlichen Durchmesser der Granulatkörner von 0,5 mm bis 1,0 mm.

Die Düsenöffnungen waren zu jeweils einem Cluster von 19 Düsenöffnungen (Durchmesser jeweils 0,6 mm) mit einem Abstand von 1,8 mm zueinander zusammengefasst und jeweils einem erfindungsgemäßen Lochplatteneinsatz mit einem dort hindurch verlaufenden Schmelzekanal mit kreisförmigem Querschnitt mit einem Durchmesser von 8 mm zugeordnet. Die jeweiligen Lochplatteneinsätze waren im Bereich der dort jeweils hindurch verlaufenden Schmelzekanäle glättend oberflächenbearbeitet mit einer sich so dort ergebenden Rauhigkeit von weniger als 0,8 µm.

Konkret wurde in einer entsprechenden Unterwassergranulationsvorrichtung der Anmelderin eine Polystyrolschmelze mit einem Zusatz von 4-7%Pentan als Treibmittel (mit Pentan begastes Polystyrol) zu Granulatkömem verarbeitet. Die in der Schmelzeströmung beim Eintritt in den Schmelzekanal dort gemessene Schmelzetemperatur lag zwischen 170 und 190°C. Die durch in den Lochplattengrundkörper im Bereich der Schmelzekanäle in deren Nähe in den Lochplattengrundkörper einbringbare Thermoelemente bestimmte Temperatur des Lochplattengrundkörpers lag dabei zwischen 180 und 200°C. Die Temperatur eines Temperieröls, welches zusätzliche Temperierkanäle im Lochplattengrundkörper durchströmte, lag zwischen 200 und 220°C. Der Druckabfall der Schmelze vom Eintritt in den Schmelzekanal vom dort gemessenen Druckwert im Schmelzestrom bis zu den Düsenöffnungen mit dem dort gemessenen Druckwert im Schmelzestrom beim Austritt aus den Düsenöffnungen lag über die Dicke der Lochplatte in einem Bereich von 100 bis 160 bar. Die so erzeugten Granulatkörner waren von gleichbleibender Qualität und Zusammensetzung.

## Patentansprüche

1. Lochplatte (1) einer Granuliervorrichtung, mit zumindest einer darin angeordneten Düsenöffnung (3) und mit einem oder mehreren Lochplatteneinsätzen (2), eingesetzt in einen Lochplattengrundkörper (4) der Lochplatte (1), wobei in Hauptflussrichtung gesehen im eingangsseitigen und ausgangsseitigen Bereich des jeweilige Lochplatteneinsatzes (2) zumindest ein ausgangsseitiger Abstandskragen (5) und zumindest ein eingangsseitiger Abstandskragen (6) vorgesehen sind, so dass zwischen dem jeweiligen Lochplatteneinsatz (2) und dem Lochplattengrundkörper (4) jeweils ein über die gesamte Länge des Lochplatteneinsatzes (2) verlaufender Luftspalt (7) besteht,
**dadurch gekennzeichnet,**
- **dass** im Bereich des durch einen jeweiligen Lochplatteneinsatz (2) hindurch verlaufenden Schmelzekanals (9) dieser Schmelzekanal (9) jeweils strömungsoptimierende Maßnahmen aufweist, in Form einer Anti-Haft Beschichtung (8) und/oder in Form eines Honens als spanend glättende Oberflächenbearbeitung,
- **dass** mehrere Düsenöffnungen (3) jeweils einem Lochplatteneinsatz (2) clusterartig zugeordnet und in einem Lochplattenverstärkungselement (12) angeordnet sind,
- **dass** der Luftspalt (7), der Lochplatteneinsatz (2) und der Schmelzekanal (9) auf diesem Lochplattenverstärkungselement (12) mit den clusterartig angeordneten Düsenöffnungen (3) in Hauptflussrichtung enden, und
- **dass** zumindest der ausgangsseitige Abstandskragen (5) umfänglich abschnittsweise unterbrochen ausgebildet ist.

2. Lochplatte nach Anspruch 1, **dadurch gekennzeichnet, dass** der jeweils ausgangsseitige Abstandskragen (5) in einem Bereich angeordnet ist, in welchem im eingebauten Zustand des jeweiligen Lochplatteneinsatzes (2) in den Lochplattengrundkörper (4) die dortige Temperatur des umgebenden Lochplattengrundkörpers (4) gleich der Temperatur der dort durch den Schmelzekanal (9) strömenden Schmelze ist.

3. Lochplatte nach Anspruch 1 oder 2, **dadurch gekennzeichnet, dass** der jeweilige Lochplatteneinsatz (2) aus einem wärmeisolierenden Material mit einem Wärmeleitkoeffizienten, welcher kleiner ist als der Wärmeleitkoeffizient des Materials des Lochplattengrundkörpers (4) besteht.

4. Lochplatte nach einem der Ansprüche 1 bis 3, **dadurch gekennzeichnet, dass** die strömungsoptimierende Maßnahme in Form des Honens als spanend glättende Oberflächenbearbeitung eine Oberflächenrauhigkeit im Bereich des Schmelzekanals (9) von kleiner oder gleich 0,8 µm ergibt.

5. Lochplatte nach einem der Ansprüche 1 bis 4, **dadurch gekennzeichnet, dass** die strömungsoptimierende Maßnahme in Form des Honens als spanend glättende Oberflächenbearbeitung eine Oberflächenrauhigkeit im Bereich des Schmelzekanals (9) von 0,4 µm bis 0,6 µm ergibt.

6. Lochplatte nach einem der Ansprüche 1 bis 5, **dadurch gekennzeichnet, dass** zumindest der eingangsseitige Abstandskragen (6) umfänglich durchgehend ausgebildet ist, so dass er den jeweiligen Lochplatteneinsatz (2) gegen den jeweiligen Luftspalt (7) zwischen dem jeweiligen Lochplatteneinsatz (2) und dem Lochplattengrundkörper (4) dort abdichtend abschließt.

7. Lochplatte nach einem der Ansprüche 1 bis 6, **dadurch gekennzeichnet, dass** der ausgangsseitige Abstandskragen (5) und/oder der eingangsseitige Abstandskragen (6) am jeweiligen Lochplatteneinsatz (2) angeordnet ist.

8. Lochplatte nach einem der Ansprüche 1 bis 6, **dadurch gekennzeichnet, dass** der ausgangsseitige Abstandskragen (5) und/oder der eingangsseitige Abstandskragen (6) am Lochplattengrundkörper (4) angeordnet ist.

9. Lochplatte nach einem der Ansprüche 1 bis 8, **dadurch gekennzeichnet, dass** der jeweilige Luftspalt (9) von einem Temperierfluid durchströmbar ist.

10. Lochplatte nach einem der Ansprüche 1 bis 9, **dadurch gekennzeichnet, dass** eine zusätzliche Heizeinrichtung der Lochplatte vorgesehen ist, wobei die Heizeinrichtung durch Temperierkanäle (13) in der Lochplatte, welche über einen Zulauf und Ablauf mit einem Temperierfluid durchströmbar sind, oder durch elektrisch widerstandsbeheizbare Einsätze in die Lochplatte ausgebildet ist.

11. Lochplatte nach Anspruch 10, **dadurch gekennzeichnet, dass** das Temperierfluid der zusätzlichen Heizeinrichtung auch den Luftspalt (9) durchströmt, wobei eine Fluidverbindung zwischen den Temperierkanälen (13) und dem jeweiligen Luftspalt (9) besteht.

12. Lochplatte nach einem der Ansprüche 1 bis 11, **dadurch gekennzeichnet, dass** der Lochplatteneinsatz (2) aus einem Keramik-Material oder aus einem temperaturbeständigen Polymermaterial besteht, bevorzugt aus Polymermaterial aus der Gruppe PBI, PTFE, PAI, PEEK oder PPS mit denen Polymeren und/oder Copolymeren.

13. Lochplatte nach einem der Ansprüche 1 bis 12, **dadurch gekennzeichnet, dass** die Oberfläche davon, aus welcher zu granulierendes Schmelzematerial austritt, mit einer abrasionsresistenten Schicht versehen ist, bevorzugt aus Metall-Nitrit, besonders bevorzugt Chrom-Nitrit oder Titan-Nitrit.

14. System zur Granulierung in einem Fluid, **dadurch gekennzeichnet, dass** es eine Lochplatte nach einem der Ansprüche 1 bis 13 aufweist.

15. Lochplatteneinsatz (2) zum Einsetzen in einen Lochplattengrundkörper (4) einer Lochplatte (1) einer Granuliervorrichtung,
wobei in Hauptflussrichtung gesehen im eingangsseitigen und ausgangsseitigen Bereich des jeweiligen Lochplatteneinsatzes (2) zumindest ein ausgangsseitiger Abstandskragen (5) und zumindest ein eingangsseitiger Abstandskragen (6) vorgesehen sind, so dass zwischen dem jeweiligen Lochplatteneinsatz (2) und dem Lochplattengrundkörper (4) jeweils ein über die gesamte Länge des Lochplatteneinsatzes (2) verlaufender Luftspalt (7) besteht,
**dadurch gekennzeichnet,**
- **dass** im Bereich des durch einen jeweiligen Lochplatteneinsatz (2) hindurch verlaufenden Schmelzekanals (9) dieser Schmelzekanal (9) jeweils strömungsoptimierende Maßnahmen aufweist, in Form einer Anti-Haft Beschichtung (8) und/oder in Form eines Honens als spanend glättende Oberflächenbearbeitung,
- **dass** mehrere Düsenöffnungen (3) jeweils einem Lochplatteneinsatz (2) clusterartig zugeordnet und in einem Lochplattenverstärkungselement (12) angeordnet sind,
- **dass** der Luftspalt (7), der Lochplatteneinsatz (2) und der Schmelzekanal (9) auf diesem Lochplattenverstärkungselement (12) mit den clusterartig angeordneten Düsenöffnungen (3) in Hauptflussrichtung enden, und
- **dass** zumindest der ausgangsseitige Abstandskragen (5) umfänglich abschnittsweise unterbrochen ausgebildet ist.

16. Lochplatteneinsatz (2) nach Anspruch 15, **dadurch gekennzeichnet, dass** der ausgangsseitige Abstandskragen (5) und/oder der eingangsseitige Abstandskragen (6) am jeweiligen Lochplatteneinsatz (2) angeordnet ist

17. Lochplatteneinsatz (2) nach Anspruch 15 oder 16, **dadurch gekennzeichnet, dass** der Lochplatteneinsatz (2) aus einem wärmeisolierenden Material mit einem Wärmeleitkoeffizienten, welcher kleiner ist als der Wärmeleitkoeffizient des Materials des Lochplattengrundkörpers (4), besteht.

18. Lochplatteneinsatz (2) nach einem der Ansprüche 15 bis 17, **dadurch gekennzeichnet, dass** die strömungsoptimierende Maßnahme in Form des Honens als spanend glättende Oberflächenbearbeitung eine Oberflächenrauhigkeit im Bereich des Schmelzekanals (9) von kleiner 0,8 µm im Bereich von 0,4 µm bis 0,6 µm ergibt.

19. Lochplatteneinsatz (2) nach einem der Ansprüche 15 bis 18, **dadurch gekennzeichnet, dass** der jeweils ausgangsseitige Abstandskragen (5) in einem Bereich angeordnet ist, in welchem im eingebauten Zustand des jeweiligen Lochplatteneinsatzes (2) in den Lochplattengrundkörper (4) die dortige Temperatur des umgebenden Lochplattengrundkörpers (4) gleich der Temperatur der dort durch den Schmelzekanal (9) strömenden Schmelze ist.

20. Lochplatteneinsatz (2) nach einem der Ansprüche 15 bis 19, **dadurch gekennzeichnet, dass** zumindest der eingangsseitige Abstandskragen (6) umfänglich durchgehend ausgebildet ist, so dass er den jeweiligen Lochplatteneinsatz (2) gegen den jeweiligen Luftspalt (7) zwischen dem jeweiligen Lochplatteneinsatz (2) und dem Lochplattengrundkörper (4) dort abdichtend abschließt.

21. Verwendung einer Lochplatte nach einem der Ansprüche 1 bis 13 oder eines Systems nach Anspruch 14 oder eines Lochplatteneinsatzes nach einem der Ansprüche 15 bis 20, **dadurch gekennzeichnet, dass** die Verwendung für eine Granulierung einer Schmelze aus thermoplastischem Kunststoffmaterial und/oder eine Polymerschmelze in einem Fluid erfolgt, wobei die Schmelze Caprolactam und/oder ein Schäummittel als einen thermisch sensiblen Bestandteil enthält, wie ein Polyamid 6 mit Caprolactam als flüchtigem Bestandteil oder expandierbares Polystyrol, EPS, mit Pentan als Treibmittel und/oder einem bromhaltigen Flammschutzmittel.

## Claims

1. A perforated plate (1) of a granulating device, with at least one nozzle aperture (3) situated therein and with one or more perforated plate inserts (2), which are inserted into a perforated plate base body (4) of the perforated plate (1), wherein viewed in the main flow direction, in the inlet region and outlet region of the respective perforated plate insert (2), at least one outlet-side spacer collar (5) and at least one inlet-side spacer collar (6) are provided so that between the respective perforated plate insert (2) and the perforated plate base body (4), there is an air gap (7) extending over the entire length of the perforated plate insert (2),
**characterized in that**
- in the region of the melt conduit (9) extending through each respective perforated plate insert (2), this melt conduit (9) has respective flow-optimizing measures in the form of a nonstick coating (8) and/or the form of a honing as a material-removing, smoothing surface treatment,
- a plurality of nozzle apertures (3) are respectively associated in cluster fashion with a perforated plate insert (2) and are arranged in a perforated plate reinforcing element (12),
- the air gap (7), the perforated plate insert (2), and the melt conduit (9) end in the main flow direction at this perforated plate reinforcing element (12) with the nozzle apertures (3) that are arranged in cluster fashion, and
- at least the outlet-side spacer collar (5) is embodied as discontinuous in some sections of the circumference.

2. The perforated plate according to claim 1, **characterized in that** the respective outlet-side spacer collar (5) is situated in a region in which in the installed state of the respective perforated plate insert (2) into the perforated plate base body (4), the temperature of the surrounding perforated plate base body (4) there is equal to the temperature of the melt flowing through the melt conduit (9) there.

3. The perforated plate according to claim 1 or 2, **characterized in that** the respective perforated plate insert (2) is composed of a thermally insulating material with a thermal conductivity coefficient that is less than the thermal conductivity coefficient of the material of the perforated plate base body (4).

4. The perforated plate according to one of claims 1 through 3, **characterized in that** the flow-optimizing measure in the form of the honing as a material-removing, smoothing surface treatment produces a surface roughness of less than or equal to 0.8 µm in the region of the melt conduit (9).

5. The perforated plate according to one of claims 1 through 4, **characterized in that** the flow-optimizing measure in the form of the honing as a material-removing, smoothing surface treatment produces a surface roughness of 0,4 µm to 0.6 µm in the region of the melt conduit (9).

6. The perforated plate according to one of claims 1 through 5, **characterized in that** at least the inlet-side spacer collar (6) is embodied as continuous on the circumference so that it closes the respective perforated plate insert (2) against the respective air gap (7) between the respective perforated plate insert (2) and the perforated plate base body (4) in a sealed fashion there.

7. The perforated plate according to one of claims 1 through 6, **characterized in that** the outlet-side spacer collar (5) and/or the inlet-side spacer collar (6) is/are situated on the respective perforated plate insert (2).

8. The perforated plate according to one of claims 1 through 6, **characterized in that** the outlet-side spacer collar (5) and/or the inlet-side spacer collar (6) is/are situated on the perforated plate base body (4).

9. The perforated plate according to one of claims 1 through 8, **characterized in that** it is possible for a tempering fluid to flow through the respective air gap (9).

10. The perforated plate according to one of claims 1 through 9, **characterized in that** an additional heating device for the perforated plate is provided and a tempering fluid is able to flow through the heating device via tempering conduits (13) in the perforated plate via an inlet and outlet or through electrical resistance-heated inserts in the perforated plate.

11. The perforated plate according to claim 10, **characterized in that** the tempering fluid of the additional heating device also flows through the air gap (9) and there is a fluidic connection between the tempering conduits (13) and the respective air gap (9).

12. The perforated plate according to one of claims 1 through 11, **characterized in that** the perforated plate insert (2) is composed of a ceramic material or of a temperature-resistant polymer material, preferably a polymer material from the group including PBI, PTFE, PAI, PEEK, or PPS, with their polymers and/or copolymers.

13. The perforated plate according to one of claims 1 through 12, **characterized in that** the surface of it, from which the molten material that is to be granulated emerges, is provided with an abrasion-resistant layer, preferably composed of metal nitrite and particularly preferably, composed of chromium nitrite or titanium nitrite.

14. A system for granulating in a fluid, **characterized in that** it has a perforated plate according to one of claims 1 through 13.

15. A perforated plate insert (2) for insertion into a perforated plate base body (4) of a perforated plate (1) of a granulating device
wherein viewed in the main flow direction, in the inlet region and outlet region of the respective perforated plate insert (2), at least one outlet-side spacer collar (5) and at least one inlet-side spacer collar (6) are provided so that between the respective perforated plate insert (2) and the perforated plate base body (4), there is an air gap (7) extending over the entire length of the perforated plate insert (2),
**characterized in that**
- in the region of the melt conduit (9) extending through each respective perforated plate insert (2), this melt conduit (9) has respective flow-optimizing measures in the form of a nonstick coating (8) and/or the form of a honing as a material-removing, smoothing surface treatment,
- a plurality of nozzle apertures (3) are respectively associated in cluster fashion with a perforated plate insert (2) and are arranged in a perforated plate reinforcing element (12),
- the air gap (7), the perforated plate insert (2), and the melt conduit (9) end in the main flow direction at this perforated plate reinforcing element (12) with the nozzle apertures (3) that are arranged in cluster fashion, and
- at least the outlet-side spacer collar (5) is embodied as discontinuous in some sections of the circumference.

16. The perforated plate insert (2) according to claim 15, **characterized in that** the outlet-side spacer collars (5) and/or inlet-side spacer collars (6) is/are situated on the respective perforated plate insert (2).

17. The perforated plate insert (2) according to claim 15 or 16, **characterized in that** the perforated plate insert (2) is composed of a thermally insulating material with a thermal conductivity coefficient that is less than the thermal conductivity coefficient of the material of the perforated plate base body (4).

18. The perforated plate insert (2) according to one of claims 15 through 17, **characterized in that** the flow-optimizing measure in the form of the honing as a material-removing, smoothing surface treatment produces a surface roughness in the region of the melt conduit (9) of less than or equal to 0.8 µm, in the range from 0.4 µm to 0,6 µm.

19. The perforated plate insert (2) according to one of claims 15 through 18, **characterized in that** the respective outlet-side spacer collar (5) is situated in a region in which in the installed state of the respective perforated plate insert (2) into the perforated plate base body (4), the temperature of the surrounding perforated plate base body (4) there is equal to the temperature of the melt flowing through the melt conduit (9) there.

20. The perforated plate insert (2) according to one of claims 15 through 19, **characterized in that** at least the inlet-side spacer collar (6) is embodied as continuous on the circumference so that it closes the respective perforated plate insert (2) against the respective air gap (7) between the respective perforated plate insert (2) and the perforated plate base body (4) in a sealed fashion there.

21. A use of a perforated plate according to one of claims 1 through 13, or a system according to claim 14, or a perforated plate insert according to one of claims 15 through 20, **characterized in that** the use is carried out in a fluid and for a granulation of a melt composed of thermoplastic plastic material and/or a polymer melt, the melt containing caprolactam and/or a foaming agent as a thermally sensitive component, e.g. a polyamide 6 with caprolactam as a volatile component or expandable polystyrene, EPS, with pentane as a propellant and/or a bromine-containing fire retardant.

## Revendications

1. Plaque à orifices multiples (1) pour un dispositif de granulation présentant au moins une ouverture à buse (3) ménagée dans la dite plaque et un ou plusieurs inserts (2) pour plaque à orifices multiples inséré dans un corps de base (4) de plaque à orifices multiples de la plaque à orifices multiples (1), et vu dans le sens d'écoulement principal, au moins une collerette d'écartement en aval (5) et au moins une collerette d'écartement en amont (6) de l'insert (2) pour plaque à orifices multiples correspondant étant prévues, de sorte qu'entre l'insert (2) pour plaque à orifices multiples et le corps de base (4), il existe respectivement un interstice (7) s'étendant sur toute la longueur de l'insert (2) pour plaque à orifices multiples,
**caractérisée en ce que**,
- dans la zone du canal de fusion (9) traversant la zone d'un insert (2) pour plaque à orifices multiples correspondant, ce canal de fusion (9) présente des mesures respectives d'optimisation de l'écoulement, sous la forme d'une couche anti-adhérente (8) et/ou sous la forme d'une rectification comme traitement de surface lissant par enlèvement de copeaux
- plusieurs ouvertures de buses (3) sont respectivement attribuées à un insert (2) pour plaque à orifices multiples en étant regroupées et disposées dans un élément de renfort (12) de plaque à orifices multiples
- l'interstice (7), l'insert (2) pour plaque à orifices multiples et le canal de fusion (9) se terminent sur cet élément de renfort (12) par les ouvertures de buse (3) regroupées dans le sens de l'écoulement principal et
- qu'au moins la collerette d'écartement en aval (5) est interrompue dans sa périphérie sur certaines sections.

2. Plaque à orifices multiples selon la revendication 1 **caractérisée en ce que** la collerette d'écartement correspondante en aval (5) est située dans une zone dans laquelle, lorsque l'insert (2) pour plaque à orifices multiples correspondant est monté dans le corps de base (4) de plaque à orifices multiples, la température locale du corps de base (4) de la plaque à orifices multiples environnant est égale à la température de la masse en fusion s'écoulant dans le canal de fusion (9).

3. Plaque à orifices multiples selon la revendication 1 ou 2 **caractérisée en ce que** l'insert (2) pour plaque à orifices multiples correspondant est en un matériau isolant présentant un coefficient de conduction de la chaleur inférieur au coefficient de conduction de la chaleur du matériau constituant le corps de base (4) de plaque à orifices multiples.

4. Plaque à orifices multiples selon la revendication 1 à 3 **caractérisée en ce que** la mesure d'optimisation de l'écoulement sous la forme de rectification comme traitement de surface lissant par enlèvement de copeaux résulte en une rugosité superficielle dans la zone du canal de fusion (9) inférieure ou égale à 0,8 µm.

5. Plaque à orifices multiples selon la revendication 1 à 4 **caractérisée en ce que** la mesure d'optimisation de l'écoulement sous la forme de rectification comme traitement de surface lissant par enlèvement de copeaux résulte en une rugosité superficielle dans la zone du canal de fusion (9) de 0,4 µm à 0.6 µm.

6. Plaque à orifices multiples selon la revendication 1 à 5 **caractérisée en ce qu'**au moins la collerette d'écartement en amont (6) est continue dans sa périphérie, de sorte qu'elle étanchéifie l'insert (2) pour plaque à orifices multiples correspondant par rapport à l'interstice (7) correspondant situé entre l'insert (2) et le corps de base (4) de plaque à orifices multiples.

7. Plaque à orifices multiples selon la revendication 1 à 6 **caractérisée en ce que** la collerette d'écartement en aval (5) et/ou la collerette d'écartement en amont (6) sont disposées sur l'insert (2) pour plaque à orifices multiples.

8. Plaque à orifices multiples selon la revendication 1 à 6 **caractérisée en ce que** la collerette d'écartement en aval (5) et/ou la collerette d'écartement en amont (6) sont disposées sur le corps de base (4) de plaque à orifices multiples.

9. Plaque à orifices multiples selon la revendication 1 à 8 **caractérisée en ce que** l'interstice (9) correspondant est traversé par un liquide de régulation de température.

10. Plaque à orifices multiples selon la revendication 1 à 9 **caractérisée en ce qu'**un dispositif de chauffage supplémentaire de la plaque à orifices multiples est prévu, le dispositif de chauffage étant constitué par des canaux de régulation de température (13) dans la plaque à orifices multiples qui sont traversés par un liquide de régulation de température circulant ou par des éléments chauffants à résistance électrique situés dans la plaque à orifices multiples.

11. Plaque à orifices multiples selon la revendication 10 **caractérisée en ce que** le liquide de régulation de température du dispositif supplémentaire de chauffage traverse aussi l'interstice (9), une liaison fluide existant entre les canaux de régulation de température (13) et l'interstice (9) respectif.

12. Plaque à orifices multiples selon la revendication 1 à 11 **caractérisée en ce que** l'insert (2) pour plaque à orifices multiples est en un matériau céramique ou un polymère thermorésistant, de préférence un polymère du groupe PBI, PTFE, PAI ,PEEK ou PPS avec ses polymères et/ou copolymères.

13. Plaque à orifices multiples selon la revendication 1 à 12 **caractérisée en ce que** sa surface dont est extrudée la masse en fusion à granuler est revêtue d'une couche résistante à l'abrasion, de préférence en un nitrure métallique, le nitrure de chrome ou le nitrure de titane étant particulièrement préférés.

14. Système pour granulation immergée, **caractérisé en ce qu'**il présente une plaque à orifices multiples selon une des revendications 1 à 13.

15. Insert (2) pour plaque à orifices multiples destiné à être inséré dans un corps de base (4) pour plaque à orifices multiples (1) d'une plaque à orifices multiples d'un dispositif à granulation dans lequel au moins une collerette d'écartement en aval (5) et au moins une collerette d'écartement en amont (6) de l'insert (2) pour plaque à orifices multiples correspondant étant prévues, vu dans le sens d'écoulement principal, de sorte qu'entre l'insert (2) correspondant pour plaque à orifices multiples et le corps de base (4), il existe respectivement un interstice (7) s'étendant sur toute la longueur de l'insert (2) pour plaque à orifices multiples
**caractérisé en ce que**
- le canal de fusion (9) traversant la zone d'un insert (2) pour plaque à orifices multiples correspondant, ce canal de fusion (9) présente des mesures respectives d'optimisation de l'écoulement, sous la forme d'une couche anti-adhérente (8) et/ou sous la forme d'une rectification comme traitement de surface lissant par enlèvement de copeaux
- plusieurs ouvertures de buses (3) sont respectivement attribuées à un insert (2) pour plaque à orifices multiples en étant regroupées et disposées dans un élément de renfort (12) de plaque à orifices multiples
- l'interstice (7), l'insert (2) pour plaque à orifices multiples et le canal de fusion (9) se terminent, vu dans le sens de l'écoulement principal, sur cet élément de renfort (12) de plaque à orifices multiples par les ouvertures de buse (3) regroupées et
- qu'au moins la collerette d'écartement en aval (5) est interrompue dans sa périphérie sur certaines sections.

16. Insert pour plaque à orifices multiples (2) selon la revendication 15 **caractérisé en ce que** la collerette d'écartement en aval (5) et/ou la collerette d'écartement en amont (6) est agencée sur l'insert (2) pour plaque à orifices multiples correspondant.

17. Insert (2) pour plaque à orifices multiples selon la revendication 15 ou 16 **caractérisé en ce que** l'insert (2) pour plaque à orifices multiples est en un matériau thermo-isolant avec un coefficient de conduction de la chaleur qui est inférieur au coefficient de conduction de la chaleur du matériau constituant le corps de base (4) des plaques à orifices multiples.

18. Insert (2) pour plaque à orifices multiples selon la revendication 15 à 17 **caractérisé en ce que** la mesure d'optimisation de l'écoulement sous la forme de la rectification est un traitement de surface lissant par enlèvement de copeaux donnant une rugosité de surface dans la zone du canal de fusion (9) inférieure à 0,8 µm dans une plage de 0,4 à 0,6 µm

19. Insert (2) pour plaque à orifices multiples selon la revendication 15 à 18 **caractérisé en ce qu'**au moins la collerette d'écartement correspondante en aval (5) est située dans une zone dans laquelle, lorsque l'insert (2) correspondant pour plaque à orifices multiples est monté dans le corps de base (4) de plaque à orifices multiples, la température locale du corps de base (4) de plaque à orifices multiples environnant est égale à la température de la masse en fusion s'écoulant dans le canal de fusion (9).

20. Insert (2) pour plaque à orifices multiples selon la revendication 15 à 19 **caractérisé en ce qu'**au moins la collerette d'écartement correspondante en amont (6) est continue dans sa périphérie de sorte que l'insert (2) pour plaque à orifices multiples est étanche par rapport à l'interstice (7) existant entre l'insert (2) pour plaque à orifices multiples correspondant et le corps de base (4) de plaque à orifices multiples.

21. Utilisation d'une plaque à orifices multiples selon une des revendications 1 à 13 ou d'un système selon la revendication 14 ou d'un insert pour plaque à orifices multiples selon une des revendications 15 à 20 **caractérisée en ce que** l'utilisation pour une granulation d'une masse fondue de matière thermoplastique et/ou masse polymérique a lieu dans un liquide, la masse fondue contenant du caprolactame et/ou un agent moussant comme constituant thermosensible, comme le polyamide 6 avec caprolactame comme constituant volatil ou du polystyrène expansible, PSE, avec du pentane comme gaz propulseur et/ou un ignifugeant contenant du brome.
